Europäisches Patentamt

European Patent Office

Office européen des brevets

(19)

(11) Numéro de publication : **0 094 637 B1**

(12) **FASCICULE DE BREVET EUROPÉEN**

(45) Date de publication du fascicule du brevet :
21.11.85

(51) Int. Cl.⁴ : **A 47 J 37/06**

(21) Numéro de dépôt : **83104730.3**

(22) Date de dépôt : **13.05.83**

(54) Appareil électrique de cuisson tel que gril ou gaufrier.

(30) Priorité : **19.05.82 FR 8208813**

(43) Date de publication de la demande :
**23.11.83 Bulletin 83/47**

(45) Mention de la délivrance du brevet :
**21.11.85 Bulletin 85/47**

(84) Etats contractants désignés :
**AT BE CH DE GB IT LI NL SE**

(56) Documents cités :
**CH-A- 559 029**
**DE-A- 2 854 991**
**DE-A- 2 855 035**
**DE-A- 3 004 053**
**FR-A- 2 302 068**
**FR-A- 2 406 934**

(73) Titulaire : **MOULINEX**
**7 à 15, rue Jules-Ferry**
**F-93171 Bagnolet (FR)**

(72) Inventeur : **Bouillet, André Société Moulinex**
**2, rue de l'Industrie Zone Industrielle**
**Cormelles le Royal-1423 Ifs (FR)**

(74) Mandataire : **May, Hans Ulrich, Dr.**
**Thierschstrasse 27**
**D-8000 München 22 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 094 637 B1

## Description

L'invention se rapporte aux appareils électriques de cuisson, tels que les grils ou les gaufriers, équipés de deux plaques chauffantes articulées l'une à l'autre.

L'invention concerne, plus précisément, les appareils électriques de cuisson comprenant une plaque chauffante inférieure disposée dans un plan horizontal et une plaque chauffante supérieure qui est reliée à la plaque inférieure par deux charnières qui sont situées respectivement sur deux côtés opposés des plaques et qui comportent chacune une glissière verticale ménagée dans un flasque latéral porté par la plaque inférieure et recevant un pivot porté par la plaque supérieure, cette plaque supérieure étant ainsi, non seulement montée pivotante par rapport à la plaque inférieure autour d'un axe horizontal, mais aussi déplaçable en hauteur par rapport à la plaque inférieure et susceptible d'être maintenue à une hauteur prédéterminée en position horizontale par un dispositif de retenue qui comporte deux butées montées mobiles respectivement sur les flasques de manière à occuper ainsi, soit une position active pour laquelle elles viennent en prise respectivement avec deux portées solidaires de la plaque supérieure et constituées respectivement par deux ergots horizontaux peu espacés desdits pivots, ceci de manière à maintenir ladite plaque supérieure à ladite hauteur prédéterminée, soit une position inactive pour laquelle elles sont effacées, autorisant le libre déplacement de la plaque supérieure selon la hauteur de la glissière.

Le brevet DE-A-2 854 991 décrit un appareil de ce genre à butées mobiles. Dans cet appareil cependant les butées sont agencées sur les faces externes des flasques et sont montées basculant autour d'un axe horizontal.

On notera d'abord qu'au cours de l'utilisation d'un tel appareil, les fréquents maniements de la plaque supérieure, nécessaires à la surveillance de la cuisson, peuvent entraîner, par frottement ou collage des portées avec les butées mobiles, de légers basculements successifs de ces butées vers l'arrière, lesquels peuvent finalement faire passer ces butées de leur position active à leur position inactive. La plaque supérieure risque alors de s'abaisser brusquement en cours d'utilisation, provoquant la détérioration de la préparation culinaire ou la projection de graisses chaudes.

L'invention a notamment pour but de supprimer tout risque d'affaissement brutal de cette plaque supérieure au cours de l'utilisation de l'appareil.

Selon la présente invention, chaque butée mobile étant montée coulissante horizontalement dans un guide selon une direction perpendiculaire à l'axe de pivotement des plaques, ce guide est formé par deux rails parallèles qui sont ménagés sur la face interne du flasque et entre lesquels coulisse un patin, et ladite butée est constituée par une aide horizontale portée par le patin.

Cette disposition permet de rendre les butées mobiles pratiquement insensibles aux efforts qui peuvent s'exercer sur elles lors du maniement de la plaque supérieur, et, étant déplaçables dans un plan horizontal, elles sont soustraites à tout effet de la gravité et sont amenées en leurs positions active et inactive par seule action volontaire de l'usager.

Les caractéristiques et avantages de l'invention ressortiront d'ailleurs de la description qui va suivre, à titre d'exemple, en référence aux dessins annexés dans lesquels :

la figure 1 est une vue frontale en élévation, avec coupe verticale partielle, d'un gril conforme à l'invention, avec la plaque supérieure maintenue à hauteur prédéterminée par le dispositif de retenue ;

la figure 2 représente en élévation le même gril en la même position, en vue latérale selon la flèche II de la figure 1, après suppression des organes constituant la charnière située à gauche sur la figure 1 ;

la figure 3 est une vue analogue à la figure 2, mais après effacement du dispositif de retenue et abaissement de la plaque supérieure en vue de griller par contact une pièce de viande disposée entre les plaques ;

la figure 4 est encore une vue analogue, mais avec la plaque supérieure basculée vers l'arrière en la position où l'usager la place normalement lorsqu'il charge les aliments dans le gril.

Le gril représenté sur ces dessins comprend une plaque chauffante inférieure 10 disposée dans un plan horizontal, et une plaque chauffante supérieure 12 reliée à la plaque inférieure 10 par deux charnières 14 situées respectivement sur deux côtés opposés des plaques. Ces charnières 14 comportent chacune une glissière verticale 18 portée par la plaque inférieure 10 et recevant un pivot 20 porté par la plaque supérieure 12. Cette plaque supérieure 12 est ainsi, non seulement montée pivotante par rapport à la plaque inférieure 10 autour d'un axe horizontal défini par les deux pivots 20, mais aussi déplaçable en hauteur par rapport à la plaque inférieure 10. Les glissières 18 sont ménagées dans deux flasques latéraux 22 qui sont portés par les côtés opposés de la plaque inférieure 10 et qui constituent également des pieds 24 pour le gril.

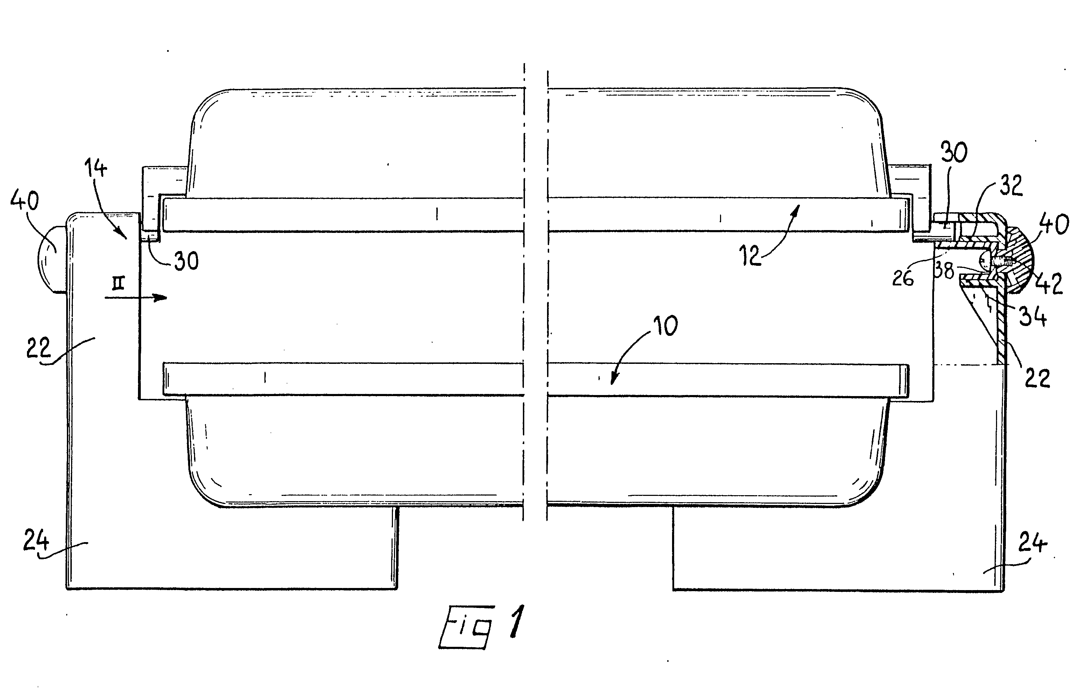

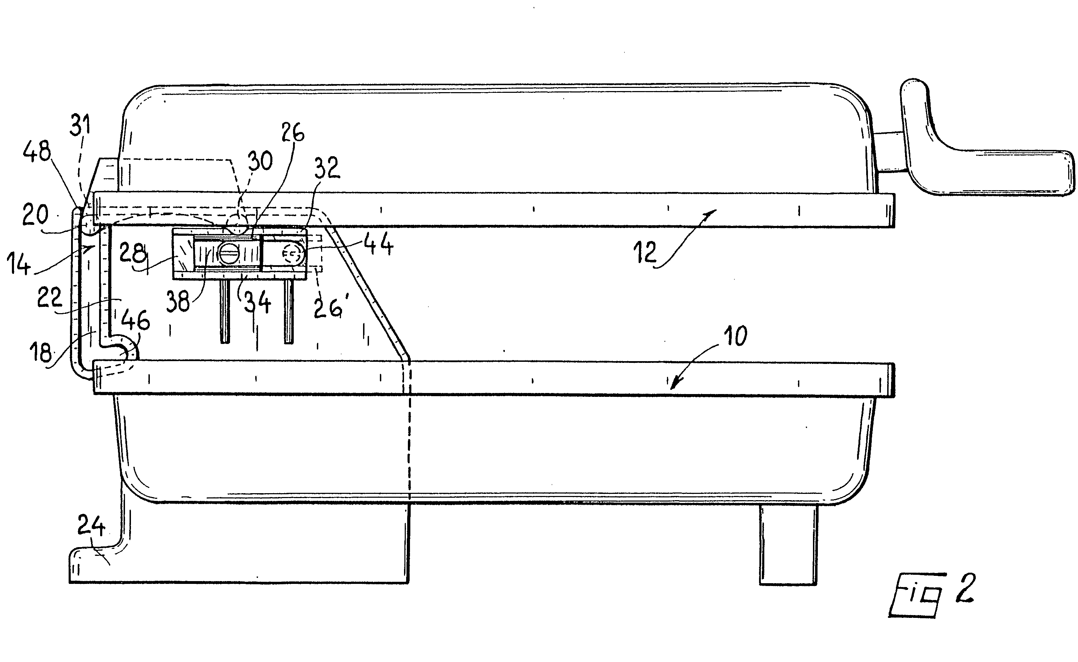

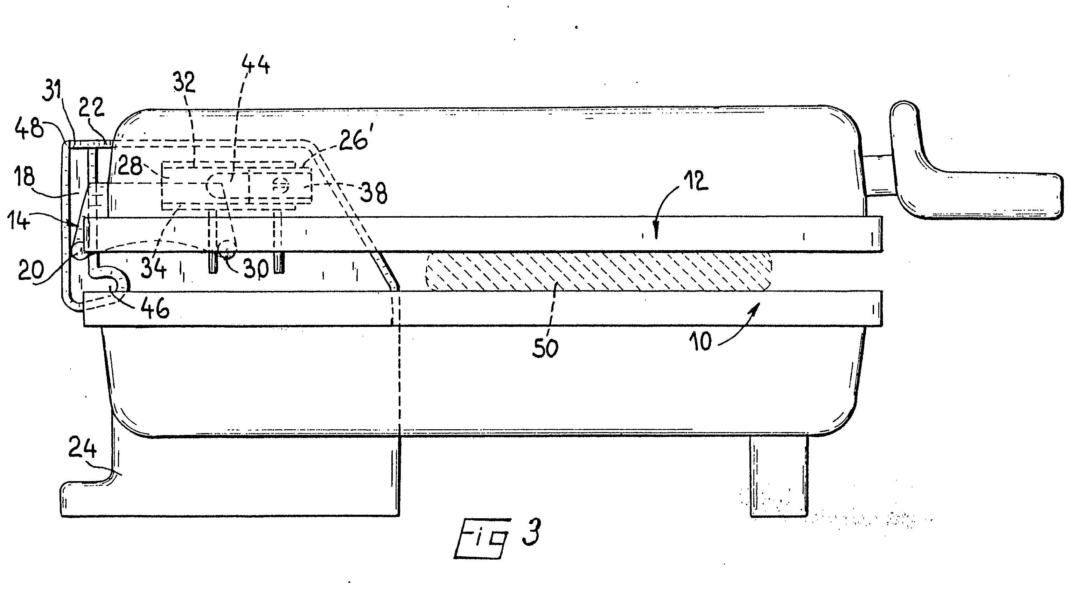

Selon l'invention, la plaque supérieure 12 est susceptible d'être maintenue à une hauteur prédéterminée en position horizontale (figures 1 et 2) par un dispositif de retenue qui comprend deux butées 26 agencées respectivement dans les flasques 22 et montées coulissantes horizontalement dans deux guides 28 selon une direction perpendiculaire à l'axe de pivotement des plaques. Ces butées 26 peuvent occuper ainsi, soit une position active (figure 1 et traits pleins de la figure 2), pour laquelle elles viennent en prise respectivement avec deux portées constituées par deux ergots 30 horizontaux solidaires de la plaque supérieure 12 et peu espacés des pivots 20, soit une position inactive (traits interrompus 26' des figures 2 et 3) pour laquelle les butées 26 sont effacées, autorisant le libre déplacement de la plaque supérieure 12 selon la hauteur de la glissière 18.

En vue de maintenir la plaque supérieure 12 en équilibre stable pour sa position horizontale à hauteur prédéterminée (figures 1 et 2), les glissières 18 comportent respectivement des arrêtoirs horizontaux 31 sous lesquels viennent buter les pivots 20 lorsque les ergots 30 s'appuient sur les butées 26.

Chaque guide 28 est formé par deux rails parallèles 32 et 34 ménagés sur la face interne du flasque 22, et chaque butée 26 est constituée par une aile horizontale portée par un patin 38 qui coulisse entre les rails 32 et 34. Afin de permettre à l'usager une manœuvre aisée des butées 26, chaque patin 38 porte une manette de commande 40 située sur la face externe du flasque 22 et reliée au patin 38 par une queue 42 qui traverse une lumière oblongue 44 pratiquée dans le flasque 22 entre les rails 32 et 34 et définissant la course horizontale de la butée 26.

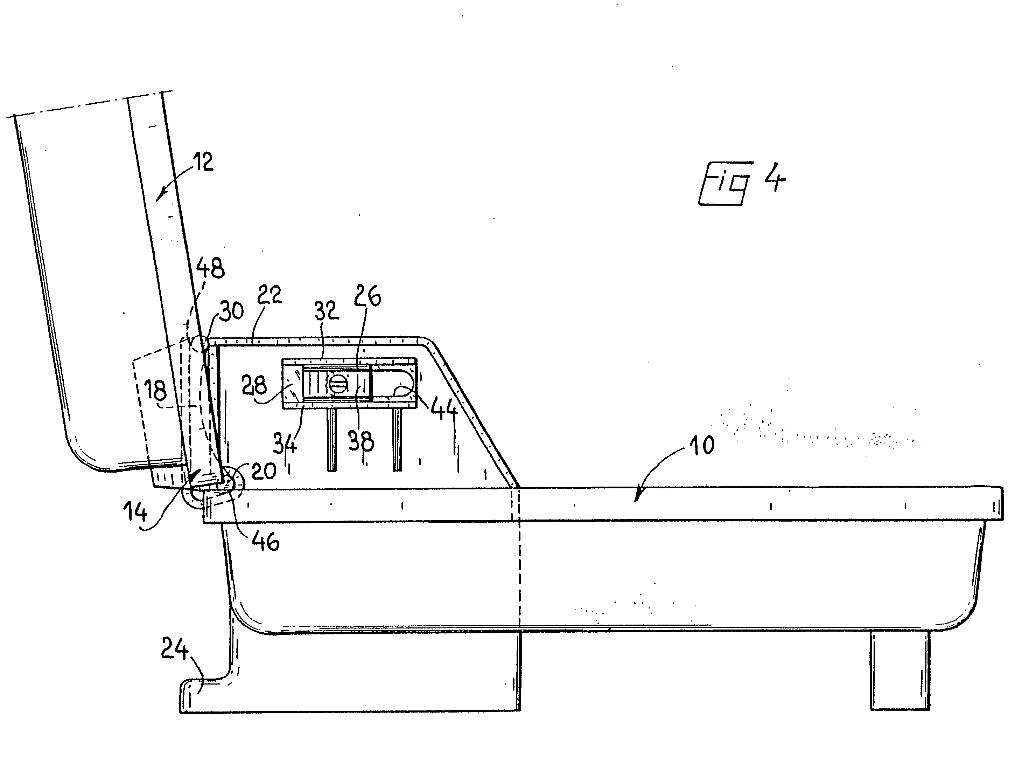

Comme on le voit notamment sur la figure 4, la partie inférieure de chaque glissière 18 communique avec une échancrure 46 dirigée vers l'avant du gril et dans laquelle peut s'engager le pivot 20. Chaque ergot 30 constitue un butoir qui, lorsque l'on engage le pivot 20 dans l'échancrure 46 et que l'on bascule la plaque 12 vers l'arrière, vient en prise avec un bossage 48 du flasque 22 pour limiter ledit basculement vers l'arrière. Ce bossage 48 est formé par un prolongement vers le haut du bord postérieur de la glissière 18.

Pour utiliser un tel gril, l'usager amène d'abord la plaque supérieure 12 en la position de la figure 4. Pour ce faire, il engage les pivots 20 dans les échancrures 46 et laisse les ergots 30 s'appuyer sur les bossages 48. Il introduit alors dans l'appareil l'aliment à cuire, par exemple une pièce de viande 50 (schématisée en traits interrompus sur la figure 3), et s'il désire la faire griller par contact direct avec les deux plaques 10 et 12, il s'assure que les butées 26 sont en position inactive (traits interrompus 26' de la figure 3). Puis il fait pivoter la plaque supérieure autour des pivots 20 qui, lors de ce mouvement, glissent d'abord dans les échancrures 46 puis remontent dans les glissières 18 jusqu'à ce que la plaque 12 repose sur la pièce de viande 50.

En revanche, si l'usager désire, par exemple, réchauffer une pizza, il actionne les manettes 40 de manière à faire coulisser les butées 26 vers leur position active (figures 1 et 2). Puis il fait pivoter la plaque supérieure 12 autour des pivots 20 jusqu'à ce que les ergots 30 viennent en prise avec les butées 26 ; cette plaque 12 bascule alors vers l'avant sous l'effet de son poids jusqu'à ce que les pivots 20, coulissant dans les glissières 18, rencontrent les arrêtoirs 31, stabilisant ainsi la plaque 12 à ladite hauteur prédéterminée. Il reste ainsi entre les deux plaques un espace propre à recevoir le mets à réchauffer, sans que la plaque supérieure exerce sur lui aucune pression.

## Revendications

1. Appareil électrique de cuisson comprenant une plaque chauffante inférieure (10) disposée dans un plan horizontal et une plaque chauffante supérieure (12) qui est reliée à la plaque inférieure par deux charnières (14) qui sont situées respectivement sur deux côtés opposés des plaques et qui comportent chacune une glissière verticale (18) ménagée dans un flasque latéral (22) porté par la plaque inférieure (10) et recevant un pivot (20) porté par la plaque supérieure (12), cette plaque supérieure (12) étant ainsi, non seulement montée pivotante par rapport à la plaque inférieure (10) autour d'un axe horizontal, mais aussi déplaçable en hauteur par rapport à la plaque inférieure (10) et susceptible d'être maintenue à une hauteur prédéterminée en position horizontale par un dispositif de retenue qui comporte deux butées (26) montées mobiles respectivement sur les flasques (22) de manière à occuper ainsi, soit une position active pour laquelle elles viennent en prise respectivement avec deux portées (30) solidaires de la plaque supérieure (12) et constituées respectivement par deux ergots horizontaux peu espacés desdits pivots (20), ceci de manière à maintenir ladite plaque supérieure (12) à ladite hauteur prédéterminée, soit une position inactive pour laquelle elles sont effacées, autorisant le libre déplacement de la plaque supérieure (12) selon la hauteur de la glissière (18), caractérisé en ce que chaque butée mobile (26) est montée coulissante horizontalement dans un guide (28) selon une direction perpendiculaire à l'axe de pivotement des plaques, ce guide (28) étant formé par deux rails parallèles (32, 34) qui sont ménagés sur la face interne du flasque (22) et entre lesquels coulisse un patin (38), et ladite butée (26) étant constituée par une aile horizontale portée par le patin (38).

2. Appareil électrique de cuisson selon la revendication 1, caractérisé en ce que chaque patin (38) porte une manette de commande (40) située sur la face externe du flasque (22) et reliée au patin (38) par une queue (42) qui traverse une lumière oblongue (44) pratiquée dans ledit flasque, entre les rails (32, 34).

3. Appareil électrique de cuisson selon la revendication 1 ou la revendication 2, caractérisé en ce que, la partie inférieure de chaque glissière (18) communiquant avec une échancrure (46) dirigée vers l'avant dans laquelle peut s'engager le pivot (20), chaque ergot (30) constitue un butoir qui, lorsque l'on engage ledit pivot (20) dans l'échancrure (46) et que l'on bascule la plaque supérieure 12 vers l'arrière, peut venir en prise avec un bossage (48) du flasque (22) pour limiter ledit basculement vers l'arrière.

4. Appareil électrique de cuisson selon la revendication 3, caractérisé en ce que le bossage (48) du flasque est formé par un prolongement vers le haut du bord postérieur de la glissière verticale (18).

## Claims

1. Electric cooking appliance comprising a lower heating plate (10) disposed in a horizontal plane and an upper heating plate (12) joined to the lower plate by means of two hinges (14) each provided at two opposite sides of the plates and each including a vertical guide rail (18) formed in a lateral flange (22) supported by the lower plate (10) to receive a pivot (20) carried by the upper plate (12), wherein the upper plate (12) is held in this way not only for pivoting movement about a horizontal axis relative to the lower plate (10) but is also movable as to its height relative to the lower plate (10) and may be retained in horizontal position at a predetermined level by retaining means which includes two stop members (26) mounted for movement relative to the flanges (22) and adapted to take either an active operative position, in which they cooperate with two supporting surfaces (30) fixedly joined to the upper plate (12), said supporting surfaces being respectively constituted by two horizontal pins disposed at a small spacing from the pivots (20) and arranged and configured such that the upper plate (12) is held at the predetermined level, or to take an inactive rest position in which they are moved away, thereby enabling free movement of the upper plate (12) along the height of the guide rail (18), characterised in that each of the movable stop members (26) is mounted in guide means (28) for horizontal movement in a direction perpendicular to the pivot axis of the plates, wherein said guide means (28) is formed by two parallel rails (32, 34) which are formed on the inside of the flange (22) and between which a rail foot (38) is movable, and that the stop member (26) is formed by a horizontal wing carried by the rail foot (38).

2. Electric cooking appliance as claimed in claim 1, characterised in that each rail foot (38) carries an operating handle (40) provided on the outside of the flange (22), said handle being joined to the rail foot (38) via a stock (42) which passes through an elongate slot (44) formed in the flange intermediate the rails (32, 34).

3. Electric cooking appliance as claimed in claim 1 or claim 2, characterised in that the lower part of each guide rail (18) communicates with a forwardly directed recess (46) in which the pivot (20) may engage, and that each pin (30) constitutes a buffer which, when the pivot (20) is allowed to engage in the recess (46) and pivots the upper plate (12) to the rear, may abut a stop (48) on the flange (22) for limiting the rearward pivoting movement.

4. Electric cooking appliance as claimed in claim 3, characterised in that the stop (48) on the flange is formed by an upward extension of the rear edge of the vertical guide rail (18).

## Patentansprüche

1. Elektrisches Back- und Bratgerät mit einer in einer waagerechten Ebene angeordneten unteren Heizplatte (10) und einer oberen Heizplatte (12), die mit der unteren Platte durch zwei Scharniere (14) verbunden ist, die jeweils an zwei gegenüberliegenden Seiten der Platten angeordnet sind und jedes eine senkrechte Führungsschiene (18) aufweisen, die in einem von der unteren Platte (10) getragenen seitlichen Flansch (22) ausgebildet ist und einen von der oberen Platte (12) getragenen Drehzapfen (20) aufnimmt, wobei die obere Platte (12) so nicht nur bezüglich der unteren Platte (10) um eine waagerechte Achse schwenkbar gehalten, sondern auch bezüglich der unteren Platte (10) der Höhe nach verschiebbar ist und in einer vorbestimmten Höhe in waagerechter Stellung durch eine Haltevorrichtung gehalten werden kann, welche zwei bezüglich der Flansche (22) beweglich montierte Anschläge (26) aufweist, die so entweder eine aktive Betriebsstellung, in der sie jeweils mit zwei mit der oberen Platte (12) fest verbundenen Auflageflächen (30) zusammenwirken, die jeweils aus zwei in geringem Abstand von den Drehzapfen (20) angeordneten waagerechten Stiften bestehen, die so ausgebildet und angeordnet sind, daß die obere Platte (12) in der vorbestimmten Höhe gehalten wird, oder eine inaktive Ruhestellung einnehmen können, in der sie beiseite bewegt sind, wodurch die freie Bewegung der oberen Platte (12) längs der Höhe der Führungsschiene (18) ermöglicht wird, dadurch gekennzeichnet, daß jeder bewegliche Anschlag (26) in einer Führung (28) in einer zur Schwenkachse der Platten senkrechten Richtung waagerecht verschiebbar montiert ist, wobei diese Führung (28) von zwei parallelen Schienen (32, 34) gebildet ist, die an der Innenseite des Flansches (22) ausgebildet sind und zwischen denen ein Fuß (38) verschiebbar ist, und der Anschlag (26) von einem vom Fuß (38) getragenen waagerechten Flügel gebildet ist.

2. Elektrisches Back- und Bratgerät nach Anspruch 1, dadurch gekennzeichnet, daß jeder Fuß (38) einen an der Aussenseite des Flansches (22) angeordneten Bedienungsgriff (40) trägt, der mit dem Fuß (38) durch einen Stiel (42) verbunden ist, der ein im Flansch zwischen den Schienen (32, 34) ausgebildetes Langloch (44) durchsetzt.

3. Elektrisches Back- und Bratgerät nach Anspruch 1 oder Anspruch 2, dadurch gekennzeichnet, daß der untere Teil jeder Führungsschiene (18) mit einer nach vorn gerichteten Aussparung (46) in Verbindung steht, in die der Drehzapfen (20) eindringen kann, und daß jeder Stift (30) einen Puffer bildet, der, wenn man den Drehzapfen (20) in die Aussparung (46) eingreifen läßt und die obere Platte (12) nach hinten schwenkt, an einen Anschlag (48) des Flansches (22) anschlagen kann, um die Schwenkbewegung nach hinten zu begrenzen.

4. Elektrisches Back- und Bratgerät nach Anspruch 3, dadurch gekennzeichnet, daß der Anschlag (48) des Flansches von einer nach oben reichenden Verlängerung des hinteren Randes der senkrechten Führungsschiene (18) gebildet ist.

0 094 637

_Fig 1_

0 094 637

Fig 2

Fig 3

0 094 637

Fig 4